# EUROPÄISCHE PATENTSCHRIFT

(11) **EP 3 616 954 B1**
(45) Veröffentlichungstag und Bekanntmachung des Hinweises auf die Patenterteilung: **26.05.2021**
(21) Anmeldenummer: 19193020.5
(22) Anmeldetag: 22.08.2019
(51) Int. Cl.: B60K 1/00, B60K 5/00

(54) **LASTKRAFTWAGEN MIT EINER ELEKTRISCHEN ANTRIEBSEINHEIT**
TRUCK WITH AN ELECTRIC DRIVE UNIT
POIDS LOURD DOTÉ D'UNE UNITÉ D'ENTRAÎNEMENT ÉLECTRIQUE

(30) Priorität: 30.08.2018 DE 102018121221
(43) Veröffentlichungstag der Anmeldung: 04.03.2020
(73) Patentinhaber: MAN Truck & Bus SE, 80995 München (DE)
(72) Erfinder: Kondic, Darko, 85757 Karlsfeld (DE)
(74) Vertreter: v. Bezold & Partner Patentanwälte - PartG mbB

(56) Entgegenhaltungen:
- EP-A2- 1 637 438
- EP-A2- 2 712 788
- WO-A1-2017/114417
- CN-B- 103 465 761
- DE-A1-102004 017 426
- US-A1- 2005 217 908

## Beschreibung

Die Erfindung betrifft einen Lastkraftwagen mit einer elektrischen Antriebseinheit.

Bei Lastkraftwagen mit Verbrennungsmotor befindet sich der Verbrennungsmotor herkömmlich im vorderen Fahrzeugbereich unter dem Fahrerhaus. Eine andere Anordnung, z. B. im Heckbereich, ist nicht zielführend, da ein Ladeaufbau des Lastkraftwagens den Bauraum von oben und der erforderliche Böschungswinkel des Lastkraftwagens den Bauraum von unten so einschränken, dass ein Verbrennungsmotor mit der Größe, wie er in Lastkraftwagen Verwendung findet, nicht mehr verbaut werden kann. Bedingt durch die Größe des Verbrennungsmotors, muss dieser unter dem Fahrerhaus positioniert werden bzw. das Fahrerhaus in erhöhter Position über dem Verbrennungsmotor positioniert werden.

Aus der DE 196 41 254 A1 ist ein Nutzfahrzeug mit einem Ladeaufbau und einem elektrischen Antrieb bekannt. Das Nutzfahrzeug weist heckseitig eine auswechselbare Energie-Versorgungs-Einheit auf. Die auswechselbare Energie-Versorgungs-Einheit ist schmaler als das Nutzfahrzeug, so dass sie zwischen rückwärtigen, seitlichen Aufbaubegrenzungen des Ladeaufbaus angeordnet ist. Die auswechselbare Energie-Versorgungs-Einheit verkleinert den zur Verfügung stehenden Laderaum des Ladeaufbaus.

Die DE 10 2013 004 837 A1 offenbart einen schweren Verteiler-Lastkraftwagen. Der Lastkraftwagen weist ein Frontmodul, ein mittiges Frachtmodul und ein heckseitiges Antriebsmodul auf. Ein Energiebereitstellungsmodul, das im Antriebsmodul aufgenommen ist, ist oberhalb der Hinterachse des Lastkraftwagens angeordnet. Das Energiebereitstellungsmodul kann einen Elektromotor aufweisen.

Die WO 2017/114417 A1 offenbart einen Muldenkipper umfassend einen Rahmen, ein erstes Achsaggregat, ein zweites Achsaggregat und ein Aufhängungssystem. Die zweite Achsbaugruppe und die erste Achsbaugruppe sind entlang einer Vorwärts-Rückwärts-Richtung in einer beabstandeten Weise angeordnet. Die zweite Achsbaugruppe umfasst zwei Fahrzeugachsbaugruppen. Mindestens eine der beiden Fahrzeugachsbaugruppen ist eine elektrisch angetriebene Achsbaugruppe.

Die US 2005/217908 A1 offenbart ein Fahrzeugchassis mit seitlich montiertem Lufteinlassplenum für Fahrgestellbaugruppen eines Freizeitfahrzeugs, wie z.B. für Wohnmobile.

Die CN 103465761 B offenbart ein Fahrzeug umfassend Fahrerkabine, Hinterachse, Übertragungswelle, Antriebsmotor, elektrokinetische Zelle, Kupplungsübertragung und Fahrzeugrahmen.

Der Erfindung liegt die Aufgabe zu Grunde, einem alternativen und/oder verbesserten Lastkraftwagen mit elektrischem Antrieb zu schaffen.

Die Aufgabe wird gelöst durch die Merkmale des unabhängigen Anspruchs 1. Vorteilhafte Weiterbildungen sind in den abhängigen Ansprüchen und der Beschreibung angegeben.

Die Erfindung schafft einen zweckmäßig elektrisch angetriebenen Lastkraftwagen (z. B. Verteiler-LKW, vorzugsweise mit Ladeaufbau, z. B. mit Kofferaufbau). Der Lastkraftwagen weist eine Hinterachse und einen Fahrzeugrahmen auf. Der Fahrzeugrahmen ist als ein Leiterrahmen ausgebildet und weist zwei Hauptlängsträger, die parallel beabstandet sind, auf. Der Lastkraftwagen weist eine elektrische Antriebseinheit auf, die zwischen den zwei Hauptlängsträgern und bezüglich einer Vorwärtsfahrtrichtung des Lastkraftwagens hinter der Hinterachse angeordnet ist.

Im Vergleich mit einer herkömmlichen Verbrennungskraftmaschine zum Antreiben eines Lastkraftwagens kann die elektrische Antriebseinheit wesentlich kompaktere Abmessungen aufweisen. Dadurch ergeben sich neue Freiheitsgrade für die Positionierung der elektrischen Antriebseinheit im Heckbereich. Die vergleichsweise geringen Abmessungen können eine Anordnung der elektrischen Antriebseinheit zwischen den Hauptlängsträgern des Fahrzeugrahmens ermöglichen. Die elektrische Antriebseinheit ist somit geschützt zwischen den Hauptlängsträgern angeordnet. Der heckseitige Bauraum zwischen den Fahrzeuglängsträgern ist herkömmlich ungenutzter Bauraum, der so besonders vorteilhaft ausgenutzt werden kann. Außerdem wird ein Ladeaufbau, z. B. Kofferaufbau, des Lastkraftwagens nicht durch die im Heckbereich zwischen den Hauptlängsträgern angeordnete elektrische Antriebseinheit beschränkt. Durch die heckseitige Anordnung der elektrischen Antriebseinheit entfällt zudem der sonst erforderliche Bauraum für die Antriebseinheit unter dem Fahrerhaus, so dass das Fahrerhaus niedriger angeordnet werden kann. Eine bodennahe Anordnung des Fahrerhauses ermöglicht ein komfortables Einsteigen in das Fahrerhaus und ein komfortables Aussteigen aus dem Fahrerhaus. Die niedrigere Sitzposition im Fahrerhaus ermöglicht zudem eine verbesserte Sicht im direkten Umfeld um das Fahrerhaus herum.

Zweckmäßig umfasst die elektrische Antriebseinheit einen einzigen Elektromotor (zum Beispiel Permanentmagnet-Elektromotor).

In einem Ausführungsbeispiel ist die elektrische Antriebseinheit antreibend mit der Hinterachse verbunden.

Gemäß der Erfindung ist eine Ausgangswelle der elektrischen Antriebseinheit in einer Längsrichtung des Lastkraftwagens ausgerichtet.

In einem weiteren Ausführungsbeispiel ist die elektrische Antriebseinheit auf Höhe der zwei Hauptlängsträger und/oder unterhalb eines Ladeaufbaus (z. B. Kofferaufbau) des Lastkraftwagens angeordnet.

In einer Ausführungsform steht die elektrische Antriebseinheit bezüglich einer Vertikalrichtung nach unten über die zwei Hauptlängsträger über. Damit können auch höherbauende elektrische Antriebseinheiten zwischen den Hauptlängsträgern angeordnet werden, ohne dass der Ladeaufbau des Lastkraftwagens, der auf den Hauptlängsträgern aufsitzt, beeinträchtigt wird.

In einer weiteren Ausführungsform ist die elektrische Antriebseinheit bezüglich einer Vertikalrichtung nach oben im Wesentlichen bündig mit den zwei Hauptlängsträgern oder bezüglich der zwei Hauptlängsträgern zurückversetzt (z. B. um weniger als 100 mm, 80 mm, 50 mm oder 30 mm). Damit wird der Ladeaufbau des Lastkraftwagens, der auf den Hauptlängsträgern aufsitzt, nicht beeinträchtigt. Insbesondere geht kein Laderaum im Ladeaufbau durch Aussparungen für die elektrische Antriebseinheit verloren.

In einer weiteren Ausführungsform weist der Lastkraftwagen ferner einen Inverter auf, der elektrisch mit der elektrischen Antriebseinheit verbunden und vorzugsweise zwischen den zwei Hauptlängsträgern (z. B. auf Höhe der Hauptlängsträger) angeordnet ist. Damit kann auch der Inverter bauraumgünstig und geschützt zwischen den zwei Hauptlängsträgern beispielsweise im Heckbereich des Lastkraftwagens angeordnet sein.

In einer Weiterbildung ist der Inverter bezüglich der Vorwärtsfahrtrichtung hinter der Hinterachse und/oder vor der elektrischen Antriebseinheit angeordnet.

In einer Ausführungsvariante ist die elektrische Antriebseinheit schräg gelagert (z. B. in einem Winkel zwischen 0° und 10° zu einer Horizontalachse). Alternativ oder zusätzlich weist der Lastkraftwagen ferner eine Gelenkwelle auf, die die elektrische Antriebseinheit vorzugsweise antreibend mit der Hinterachse verbindet, vorzugsweise in einer Längsrichtung des Lastkraftwagens ausgerichtet ist und vorzugsweise angeschrägt zu einer Horizontalachse verläuft (z. B. in einem Winkel zwischen 0° und 10° zu einer Horizontalachse). Die Schrägstellung von der elektrischen Antriebseinheit kann einen Winkelversatz zu der Gelenkwelle verringern, was bezüglich der Belastungszustände in der vorzugsweise gelenkigen Verbindung zwischen der Gelenkwelle und der elektrischen Antriebseinheit vorteilhaft ist.

In einer weiteren Ausführungsvariante ist die elektrische Antriebseinheit in einer 3-Punkt-Lagerung gelagert.

In einer Weiterbildung sind zwei Lager der 3-Punkt-Lagerung an einer der Hinterachse zugewandten Seite der elektrischen Antriebseinheit angeordnet. Alternativ oder zusätzlich ist ein Lager der 3-Punkt-Lagerung an einer der Hinterachse abgewandten Seite der elektrischen Antriebseinheit angeordnet, vorzugsweise mittig. Dadurch kann Platz für elektrische Versorgungsanschlüsse und deren Verbindungskabel an einer Rückseite der elektrischen Antriebseinheit geschaffen werden.

Zweckmäßig ist die elektrische Antriebseinheit von unten an dem Fahrzeugrahmen angebracht. Dies kann aus Montagegründen besonders vorteilhaft sein.

In einem Ausführungsbeispiel weist der Lastkraftwagen einen ersten Querträger, der zwischen den zwei Hauptlängsträgern befestigt ist, und einen zweiten Querträger, der zwischen den zwei Hauptlängsträgern befestigt ist, auf. Vorzugsweise kann die elektrischen Antriebseinheit von unten an dem ersten Querträger und/oder an dem zweiten Querträger angebracht sein.

In einer Weiterbildung ist die elektrische Antriebseinheit zwischen dem ersten Querträger und dem zweiten Querträger angeordnet (z. B. auf Höhe der zwei Querträger). Damit ist die elektrische Antriebseinheit bezüglich einer Längsachse des Lastkraftwagens geschützt zwischen den zwei Querträgern angeordnet.

In einem weiteren Ausführungsbeispiel weisen der erste Querträger und/oder der zweite Querträger ein umgedrehtes U-Profil auf, das einen Aufnahmeraum umfasst, in dem mindestens ein Lager zur Lagerung der elektrischen Antriebseinheit zumindest teilweise angeordnet sind. Damit kann das Lager teilweise geschützt durch das U-Profil in dem Aufnahmeraum positioniert sein.

In einer Ausführungsform weist der Lastkraftwagen ferner ein Fahrerhaus auf, das rückseitig, vorzugsweise starr, an dem Fahrzeugrahmen angebracht ist. Vorzugsweise begrenzt das Fahrerhaus den Lastkraftwagen nach unten, weist einen Bodenabstand von höchstens 50 cm, vorzugsweise von höchstens 40 cm, auf und/oder steht in einer Vertikalrichtung nach unten über den Fahrzeugrahmen über. Die vorteilhafte bodennahe Anordnung des Fahrerhauses kann erst durch die heckseitige Anordnung der elektrischen Antriebseinheit ermöglicht werden.

In einer weiteren Ausführungsform weist der Lastkraftwagen eine Kühlvorrichtung zum Kühlen der elektrischen Antriebseinheit und/oder eines Inverters für die elektrische Antriebseinheit auf. Vorzugsweise kann die Kühlvorrichtung bezüglich der Vorwärtsfahrtrichtung hinter der Hinterachse angeordnet und/oder außen an einem der Hauptlängsträger beispielsweise auf Höhe der Hauptlängsträger angebracht sein. Damit kann die Kühlvorrichtung direkt benachbart zu der elektrischen Antriebseinheit und/oder dem Inverter angeordnet sein. Ferner kann die Kühlvorrichtung Kühlluft direkt von einer Längsaußenseite des Lastkraftwagens ansaugen.

In einer Weiterbildung weist die Kühlvorrichtung einen Kühler, vorzugsweise einen Ölkühler, zum Kühlen der elektrischen Antriebseinheit und/oder einen Kühler, vorzugsweise einen Wasserkühler, zum Kühler des Inverters auf.

In einem Ausführungsbeispiel weist der Lastkraftwagen ferner einen heckseitigen Unterfahrschutz auf (z. B. als Rohr oder Stange ausgeführt). Vorzugsweise kann sich der heckseitige Unterfahrschutz in einer Querrichtung des Lastkraftwagens erstrecken und/oder auf Höhe der elektrischen Antriebseinheit angeordnet sein. Vorzugsweise kann damit die elektrische Antriebseinheit heckseitig durch den heckseitigen Unterfahrschutz geschützt werden. Es findet eine Funktionsintegration des heckseitigen Unterfahrschutz statt. Dieser dient einerseits, wie der Name schon sagt, als Unterfahrschutz des Lastkraftwagens und andererseits zum Schützen der elektrischen Antriebseinheit bei einem Auffahrunfall auf den Lastkraftwagen.

In einem weiteren Ausführungsbeispiel weist der Lastkraftwagen einen elektrischen Ladeanschluss zum elektrischen Aufladen des Lastkraftwagens (zum Beispiel einer oder mehrerer Traktionsbatterien des Lastkraftwagens) auf. Vorzugsweise kann der elektrische Ladeanschluss bezüglich der Vorwärtsfahrtrichtung hinter der Hinterachse angeordnet und/oder außen an einem der Hauptlängsträger (z. B. auf Höhe der Hauptlängsträger) angebracht sein. Damit kann der elektrische Ladeanschluss direkt benachbart zu der elektrischen Antriebseinheit angeordnet sein.

In einem weiteren Ausführungsbeispiel weist der Lastkraftwagen ein (z. B. herausnehmbares) elektrisches Ladekabel zum elektrischen Aufladen des Lastkraftwagens auf. Vorzugsweise kann das elektrische Ladekabel bezüglich der Vorwärtsfahrtrichtung hinter der Hinterachse angeordnet und/oder außen an einem der Hauptlängsträger (z. B. auf Höhe der Hauptlängsträger) positioniert sein. Damit kann das Ladekabel direkt benachbart zu dem elektrischen Ladeanschluss, an dem es zum Laden der Traktionsbatterie(n) anzuschließen ist, positioniert sein.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Längsschnittansicht eines unteren Bereichs eines Lastkraftwagens gemäß einem Ausführungsbeispiel der vorliegenden Offenbarung;
- Figur 2: eine perspektivische Ansicht eines Heckbereich des beispielhaften Lastkraftwagens;
- Figur 3: eine Längsschnittansicht des Heckbereich des beispielhaften Lastkraftwagens;
- Figur 4: eine Heckansicht des Heckbereich des beispielhaften Lastkraftwagens; und
- Figur 5: eine perspektivische Ansicht einer elektrischen Antriebseinheit des beispielhaften Lastkraftwagens.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

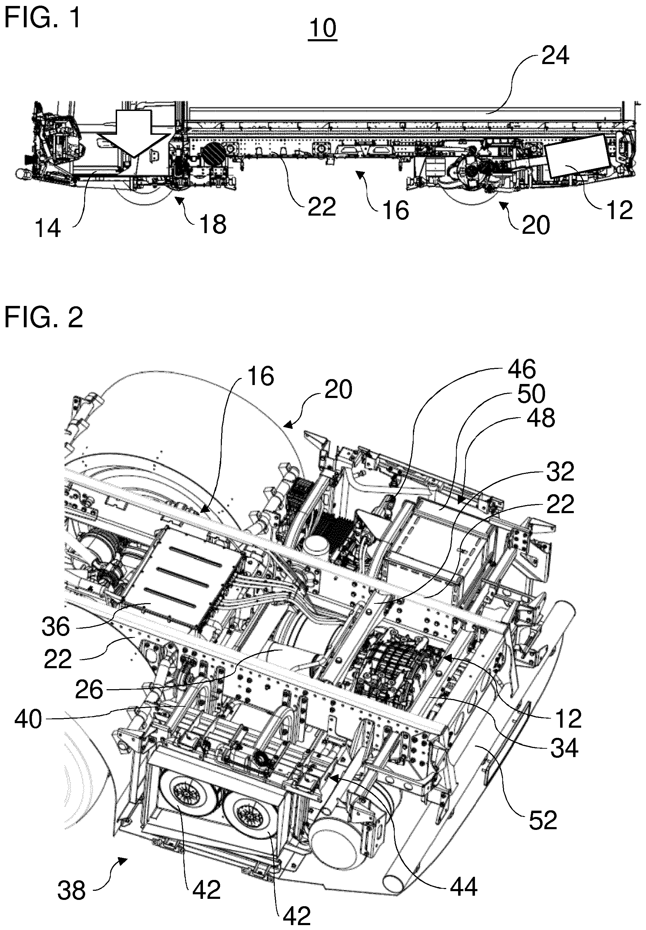

Die Figur 1 zeigt eine Längsschnittansicht eines unteren Bereichs eines Lastkraftwagens 10. Beispielsweise kann der Lastkraftwagen 10 als ein städtischer Verteiler-Lastkraftwagen genutzt werden. Der Lastkraftwagen 10 kann elektrisch angetrieben werden. Es ist allerdings auch möglich, dass der Lastkraftwagen bspw. mit einem anderen Aufbau ausgestattet oder als Sattelzugmaschine ausgebildet ist.

Der Lastkraftwagen 10 weist zweckmäßig eine elektrische Antriebseinheit 12, ein Fahrerhaus 14, einen Fahrzeugrahmen 16, eine Vorderachse 18 und eine Hinterachse 20 auf.

Der beispielhafte Lastkraftwagen 10 umfasst keine frontseitige Brennkraftmaschine. Stattdessen weist der Lastkraftwagen 10 die heckseitige elektrische Antriebseinheit 12 zum Antreiben des Lastkraftwagens 10 auf. Die elektrische Antriebseinheit 12 ist bezüglich einer Vorwärtsfahrtrichtung des Lastkraftwagens 10 hinter der Hinterachse 20 angeordnet. In Ausführungsformen, in denen der Lastkraftwagen 10 mehrerer Hinterachsen aufweist, kann die elektrische Antriebseinheit 12 vorzugsweise hinter der hintersten der Hinterachsen angeordnet sein. Zweckmäßig weist die elektrische Antriebseinheit 12 einen einzigen Elektromotor, zum Beispiel einen Permanentmagnet-Elektromotor, zum Antreiben des Lastkraftwagens 10 auf.

Dadurch dass keine frontseitige Brennkraftmaschine unterhalb des Fahrerhauses 14 umfasst ist und die elektrische Antriebseinheit 12 heckseitig angeordnet ist, wird ermöglicht, dass das Fahrerhaus 14 des Lastkraftwagens 10 tiefer als herkömmlich angeordnet werden kann (angedeutet mit einem Pfeil in Figur 1). Das Fahrerhaus 14 kann den Lastkraftwagen 10 nach unten hin begrenzen und beispielsweise einen Bodenabstand von weniger als 50 cm oder weniger als 40 cm aufweisen. Dies kann einen Einstieg in das Fahrerhaus 14 und einen Ausstieg aus dem Fahrerhaus 14 erleichtern. Zusätzlich ermöglicht das tief angeordnete Fahrerhaus 14, dass der Fahrer aus dem Fahrerhaus 14 eine bessere Sicht auf das direkte Umfeld des Fahrerhauses 14 hat.

Um eine tiefe Anordnung des Fahrerhauses 14 zu ermöglichen, kann dieses nicht -wie üblich - auf dem Fahrzeugrahmen 16 aufsitzen, sondern an einer Rückseite des Fahrerhauses 14 an dem Fahrzeugrahmen 16, vorzugsweise starr, angebracht sein. Das Fahrerhaus 14 kann direkt an dem Fahrzeugrahmen 16 angebracht sein oder indirekt, zum Beispiel mittels einer oder mehrerer Befestigungskonsolen. Es ist möglich, dass eine Rückseite des Fahrerhauses 14 mit einer Stufe versehen ist und das Fahrerhaus 14 mittels der Stufe an dem Fahrzeugrahmen 16 angebracht ist. Die Stufe ermöglicht ein Abstützen des Fahrerhauses 14 an dem Fahrzeugrahmen 16 sowohl in Horizontalrichtung als auch in Vertikalrichtung.

Der Fahrzeugrahmen 16 ist als ein Leiterrahmen mit zwei parallelen Hauptlängsträgern 22 ausgeführt. Die Hauptlängsträger 22 sind über mehrere beabstandete Querträger miteinander verbunden. Auf dem Fahrzeugrahmen 16 kann hinter dem Fahrerhaus 14 ein Ladeaufbau 24 (nur teilweise in Figur 1 dargestellt) angeordnet sein. Der Ladeaufbau 24 kann beispielsweise ein Kofferaufbau zum Transportieren von Waren sein. Andere Typen von Ladeaufbauten sind ebenfalls möglich, z. B. jegliche Typen von offenen oder geschlossenen Ladeaufbauten, z. B. auch Mulden o.ä.

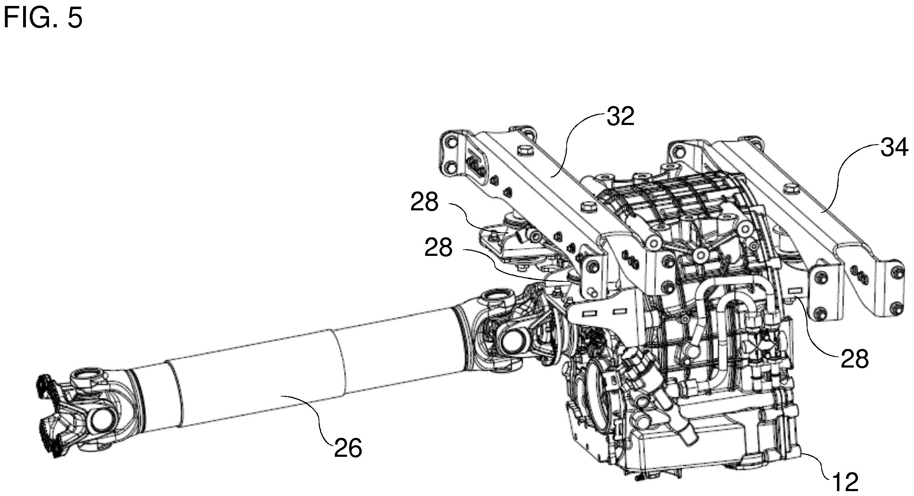

Die Figuren 2 bis 4 zeigen einen Heckbereich des Lastkraftwagens 10 in unterschiedlichen Ansichten. Die Figur 5 zeigt die im Heckbereich des Lastkraftwagens 10 angeordnete elektrische Antriebseinheit 12.

Die elektrische Antriebseinheit 12 ist innen zwischen den Hauptlängsträgern 22 angeordnet. Dies wird dadurch ermöglicht, dass die elektrische Antriebseinheit 12 bspw. im Vergleich zu einer herkömmlichen Brennkraftmaschine kompaktere Abmessungen aufweist. Zusätzlich ist bei einem herkömmlichen Lastkraftwagen mit Leiterrahmen der heckseitige Bereich zwischen den Längsträgern des Leiterrahmens im Wesentlichen ungenutzt. Die Anordnung der elektrischen Antriebseinheit 12 auf Höhe der Hauptlängsträger 22, zwischen den Hauptlängsträgern 22 und hinter der Hinterachse 20 bietet somit eine bauraumgünstige und geschützte Anordnung für die elektrische Antriebseinheit 12. Die elektrische Antriebseinheit 12 ist somit fahrzeugheckseitig direkt unterhalb des Ladeaufbaus 24 (siehe Figur 1) angeordnet.

Die Anordnung der elektrischen Antriebseinheit 12 ist so gewählt, dass die elektrische Antriebseinheit 12 bezüglich einer Vertikalrichtung nach unten über eine Unterseite der zwei Hauptlängsträger 22 übersteht. Beispielsweise steht die elektrische Antriebseinheit 12 um ungefähr eine Hälfte einer Höhe der elektrischen Antriebseinheit 12 in der Vertikalrichtung nach unten über die zwei Hauptlängsträger 22 über. Es ist auch möglich, dass die elektrische Antriebseinheit 12 mehr oder weniger in der Vertikalrichtung nach unten über die zwei Hauptlängsträger 22 übersteht. Beispielsweise kann die elektrische Antriebseinheit 12 um mindestens 1/4 oder um mindestens 1/3 von deren Höhe in der Vertikalrichtung nach unten über die zwei Hauptlängsträger 22 überstehen.

Bezüglich einer Vertikalrichtung nach oben ist die elektrische Antriebseinheit 12 im Wesentlichen bündig mit einer Oberseite der zwei Hauptlängsträger 22 angeordnet. Ein Überstehen der elektrischen Antriebseinheit 12 ist hier nicht sinnvoll, da damit die Anordnung und Konfiguration des Ladeaufbaus 24, der auf den Hauptlängsträgern abgestützt ist (siehe Figur 1), beeinträchtigt würde. Es ist auch möglich, dass die elektrische Antriebseinheit 12 bezüglich einer Oberseite der zwei Hauptlängsträgern 22 ein wenig zurückversetzt ist, zum Beispiel um weniger als 100 mm.

Die elektrische Antriebseinheit 12 ist antreibend mit der Hinterachse 20 verbunden. Die elektrische Antriebseinheit 12 treibt eine Gelenkwelle 26 an, die wiederum antreibend mit der Hinterachse 20 verbunden ist. Die Gelenkwelle 26 ist gelenkig mit der elektrischen Antriebseinheit 12 verbunden. Die Gelenkwelle 26 ist gelenkig mit der Hinterachse 20 verbunden. Die elektrische Antriebseinheit 12 und die Gelenkwelle 26 sind entlang einer Längsachse des Lastkraftwagens 10 ausgerichtet.

Die elektrische Antriebseinheit 12 ist bezüglich einer Horizontalachse schräg gelagert, zum Beispiel in einem Winkel zwischen 0° und 10°, vorzugsweise rund 5° bis 6°. Ebenso verläuft die Gelenkwelle 26 schräg bezüglich der Horizontalachse, zum Beispiel in einem Winkelbereich zwischen 0° und 10°, vorzugsweise rund 5° bis 6°. Die Schrägstellung der Gelenkwelle 26 kann bei vertikalen Einfederbewegungen der Hinterachse 20 während der Fahrt des Lastkraftwagens 10 in Belastungshinsicht bezüglich der gelenkigen Verbindung zwischen der Gelenkwelle 26 und der Hinterachse 20 vorteilhaft sein. Die Schrägstellung der elektrischen Antriebseinheit 12 ermöglicht einen kleinen oder gar keinen Winkelversatz zwischen einer Ausgangswelle der elektrischen Antriebseinheit 12 und der schräg verlaufenden Gelenkwelle 26. Ein zu großer Winkelversatz würde zu hohen Belastungen an der gelenkigen Verbindung zwischen der elektrischen Antriebseinheit 12 und der Gelenkwelle 26 während des Betriebs der elektrischen Antriebseinheit 12 führen. Die hohen Belastungen könnten schließlich zu einem Bruch der gelenkigen Verbindung zwischen der elektrischen Antriebseinheit 12 und der Gelenkwelle 26 führen.

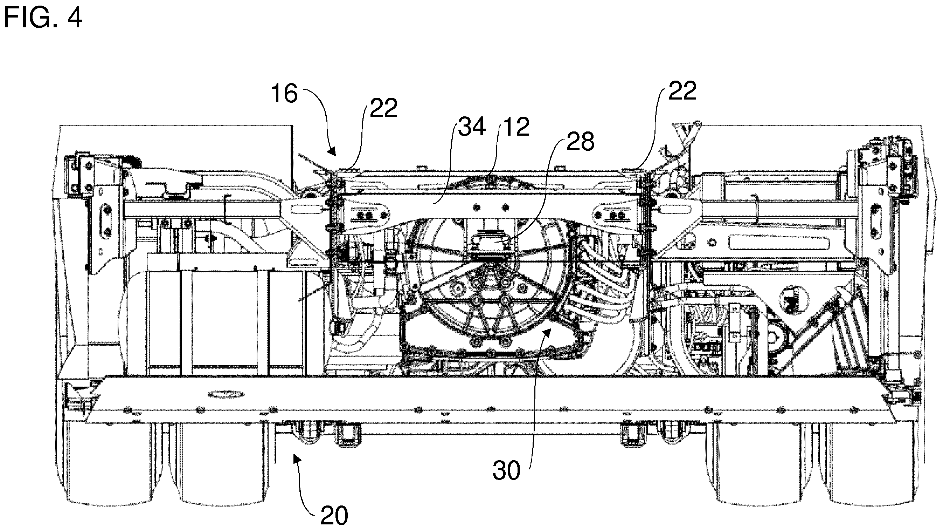

Wie in Figur 5 am besten sichtbar ist, kann die elektrische Antriebseinheit 12 zweckmäßig in einer 3-Punkt-Lagerung mittels dreier (Motor-) Lager 28 gelagert sein. Zwei der drei Lager 28 sind an einer der Hinterachse 20 zugewandten Seite der elektrischen Antriebseinheit 12 angeordnet. Ein drittes Lager 28 ist an einer Rückseite der elektrischen Antriebseinheit 12 abgewandt von der Hinterachse 20 angeordnet. Das dritte Lager 28 ist mittig bezüglich der Rückseite der elektrischen Antriebseinheit 12 angeordnet. An der Rückseite der elektrischen Antriebseinheit 12 sind zudem außermittig Hochvolt-Anschlüsse 30 (siehe Figur 4) angeordnet. Die Hochvolt-Anschlüsse 30 dienen zur elektrischen Energieversorgung der elektrischen Antriebseinheit 12. An die Hochvolt-Anschlüsse 30 sind elektrische Leitungen angeschlossen, um die elektrische Antriebseinheit 12 mit elektrischer Hochvolt-Energie zu versorgen. Durch die mittige Anordnung nur eines der drei Lager 28 an der Rückseite der elektrischen Antriebseinheit 12 wird ermöglicht, dass die Hochvolt-Anschlüsse 30 nicht verdeckt und somit leicht zugänglich zum Anschließen der entsprechenden elektrischen Leitungen sind.

Die elektrische Antriebseinheit 12 ist über zwei Querträger 32, 34 an den Hauptlängsträgern 22 befestigt. Die zwei Querträger 32 sind parallel beabstandet. Die zwei Querträger 32, 34 erstrecken sich zwischen den zwei parallelen Hauptlängsträgern 22. Die elektrische Antriebseinheit 12 ist von unten an den zwei Querträgern 32, 34 mittels der Lager 28 angebracht.

Der erste Querträger 32 ist bezüglich der Vorwärtsfahrtrichtung des Lastkraftwagens 10 vor der elektrischen Antriebseinheit 12 angeordnet. Der zweite Querträger 34 ist bezüglich der Vorwärtsfahrtrichtung des Lastkraftwagens 10 hinter der elektrischen Antriebseinheit 12 angeordnet. An dem ersten Querträger 32 sind zwei der drei Lager 28 von unten angebracht. An dem zweiten Querträger 34 ist eines der drei Lager 28 von unten angebracht. Die elektrische Antriebseinheit 12 wird so von den Querträgern 32, 34 getragen, dass sie geschützt zwischen den zwei Querträgern 32, 34 angeordnet ist.

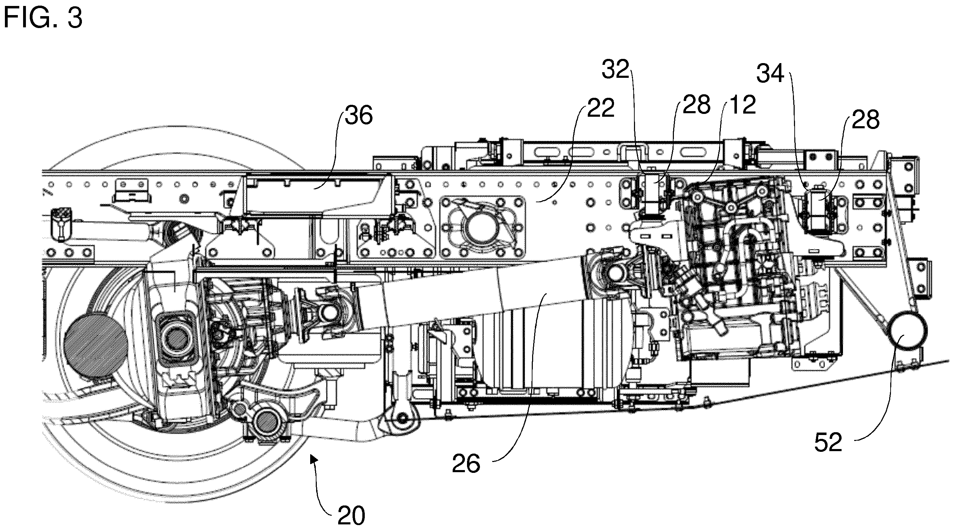

Wie dargestellt ist, können die zwei Querträger 32, 34 ein umgedrehtes U-Profil aufweisen. Zwischen den Vertikalschenkeln des umgedrehten U-Profils ergibt sich ein Aufnahmeraum, in dem die Lager 28 teilweise aufgenommen werden können (siehe beispielsweise Figuren 3 und 4). Dadurch wird eine bündige oder annähernd bündige Positionierung der elektrischen Antriebsmaschine 12 bezüglich der Oberseite der Hauptlängsträger 22 ermöglicht. Ferner sind die Lager 28 teilweise geschützt in den Querträgern 32, 34 angeordnet.

Der Lastkraftwagen 10 weist einen Inverter (Wechselrichter) 36 auf. Der Inverter 36 wandelt elektrische Hochvolt-Gleichstrom-Energie von einer oder mehreren Traktionsbatterie (nicht dargestellt) des Lastkraftwagens 10 in elektrische Hochvolt-Wechselstrom-Energie zum Antreiben der elektrischen Antriebsmaschine 12. Der Inverter 36 ist über elektrische Leitungen mit den Hochvolt-Anschlüssen 30 der elektrischen Antriebseinheit 12 verbunden. Der Inverter 36 ist geschützt zwischen den Hauptlängsträgern 22 auf Höhe der Hauptlängsträger 22 angeordnet. Der Inverter 36 ist an den Hauptlängsträgern 22 angebracht. Der Inverter 36 kann zweckmäßig hinter der Hinterachse 20 und vor der elektrischen Antriebsmaschine 12 angeordnet sein.

Während des Betriebs des Inverters 36 und/oder der elektrischen Antriebseinheit 12 können diese viel Abwärme erzeugen. Um den Inverter 36 und/oder die elektrische Antriebseinheit 12 während des Betriebs zu kühlen, kann der Lastkraftwagen 10 eine Kühlvorrichtung 38 aufweisen (siehe Figur 3). Die Kühlvorrichtung 38 ist zweckmäßig ebenfalls im Heckbereich des Lastkraftwagens 10 angeordnet. Besonders vorteilhaft kann die Kühlvorrichtung 38 an einer Längsaußenseite eines der beiden Hauptlängsträger 22 benachbart zu der elektrischen Antriebseinheit 12 angeordnet sein. Die Kühlvorrichtung 38 kann eine Halterung 40, zum Beispiel ein offenes Gestell, aufweisen, die an der Längsaußenseite des entsprechenden Hauptlängsträgers 22 befestigt ist. Zweckmäßig ist die Kühlvorrichtung 38 bezüglich einer Vertikalrichtung nach oben bündig oder zurückversetzt bezüglich einer Oberseite der Hauptlängsträger 22. Die Kühlvorrichtung 38 kann bezüglich einer Vertikalrichtung nach unten über die Hauptlängsträger 22 überstehen.

Die Kühlvorrichtung 38 kann einen oder mehrere Lüfter 42, zum Beispiel Radiallüfter, aufweisen, um Kühlluft zu einem oder mehreren Wärmetauschern oder Kühlern 44 der Kühlvorrichtung 38 zu fördern. Die Lüfter 42 können Kühlluft von einer Längsaußenseite des Lastkraftwagens 10 ansaugen. Die Kühler 44 können einen Kühler, zum Beispiel einen Ölkühler, für einen Kühlkreislauf zum Kühlen der elektrischen Antriebsmaschine 12 aufweisen. Die Kühler 44 können einen Kühler, zum Beispiel einen Wasserkühler, für einen Kühlkreislauf zum Kühlen des Inverters 36 aufweisen.

Der Lastkraftwagen 10 kann einen elektrischen Ladeanschluss 46 zum elektrischen Aufladen der Traktionsbatterie(n) des Lastkraftwagens 10 aufweisen (siehe Figur 2). Der elektrische Ladeanschluss 46 kann zweckmäßig ebenfalls im Heckbereich des Lastkraftwagens 10 benachbart zu der elektrischen Antriebseinheit 12 angeordnet sein. Bspw. kann der elektrische Ladeanschluss 46 bezüglich der Vorwärtsfahrtrichtung hinter der Hinterachse 20 angeordnet und außen an einem der zwei Hauptlängsträger 22 angebracht sein. Zweckmäßig kann der elektrische Ladeanschluss 46 auf einer der Kühlvorrichtung 38 entgegengesetzten Außenseite des Fahrzeugrahmens 16 angeordnet sein.

Zum Verbinden des elektrischen Ladeanschlusses 46 mit einer stationären Ladesäule (nicht dargestellt) kann ferner ein elektrisches Ladekabel 48 (verdeckt in Figur 2) herausnehmbar in einem Staufach 50 positioniert sein. Das Staufach 50 kann neben dem elektrischen Ladeanschluss an einer Außenlängsseite eines der Hauptlängsträger 22 hinter der Hinterachse 20 angeordnet sein. Zweckmäßig kann das Staufach 50 auf einer der Kühlvorrichtung 38 entgegengesetzten Außenseite des Fahrzeugrahmens 16 angeordnet sein.

Der Lastkraftwagen 10 kann einen heckseitigen Unterfahrschutz 52 aufweisen (siehe Figuren 2 und 3; weggelassen in Figur 4). Der heckseitige Unterfahrschutz 52 ist als Stange oder Rohr ausgeführt. Der heckseitige Unterfahrschutz 52 erstreckt sich in einer Querrichtung des Lastkraftwagens 10. Der heckseitige Unterfahrschutz 52 erstreckt sich entlang einer gesamten Breite des Lastkraftwagens 10. Der heckseitige Unterfahrschutz 52 ist auf Höhe der elektrischen Antriebseinheit 12 angeordnet. Somit schützt der heckseitige Unterfahrschutz 52 auch die elektrische Antriebseinheit 12 bei einem Auffahrunfall auf den Lastkraftwagen 10.

Der Lastkraftwagen 10 kann weitere Komponenten aufweisen, die zusätzlich bauraumgünstige im Heckbereich des Lastkraftwagens 10, vorzugsweise noch hinter der Hinterachse 20, angeordnet sein können. Diese Komponenten können vorzugsweise Komponenten einer Druckluftanlage des Lastkraftwagens 10 umfassen, wie dargestellt ist. Zum Beispiel können ein oder mehrere Druckluftspeicher, ein Luftverdichter, eine Druckluftaufbereitung und/oder Steuerventile usw. hinter der Hinterachse 20 angeordnet sein, vorzugsweise auf einer oder beiden der Längsaußenseiten des Fahrzeugrahmens 16.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die Merkmale des unabhängigen Anspruchs 1 unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration der Hinterachse, des Fahrzeugrahmens und/oder der elektrischen Antriebseinheit des unabhängigen Anspruchs 1 offenbart. Alle Bereichsangaben hierin sind derart offenbart zu verstehen, dass gleichsam alle in den jeweiligen Bereich fallenden Werte einzeln offenbart sind, z. B. auch als jeweilige bevorzugte engere Außengrenzen des jeweiligen Bereichs.

### Bezugszeichenliste

- 10: Lastkraftwagen
- 12: Elektrische Antriebseinheit
- 14: Fahrerhaus
- 16: Fahrzeugrahmen
- 18: Vorderachse
- 20: Hinterachse
- 22: Hauptlängsträger
- 24: Ladeaufbau
- 26: Gelenkwelle
- 28: Lager
- 30: Hochvolt-Anschlüsse
- 32: Erster Querträger
- 34: Zweiter Querträger
- 36: Inverter
- 38: Kühlvorrichtung
- 40: Halterung
- 42: Lüfter
- 44: Kühler
- 46: Elektrischer Ladeanschluss
- 48: Elektrisches Ladekabel
- 50: Staufach
- 52: Heckseitiger Unterfahrschutz

## Patentansprüche

1. Lastkraftwagen (10) aufweisend:
eine Hinterachse (20);
einen Fahrzeugrahmen (16), der als ein Leiterrahmen ausgebildet ist und zwei Hauptlängsträger (22), die parallel beabstandet sind, aufweist; und
eine elektrische Antriebseinheit (12), die zwischen den zwei Hauptlängsträgern (22) und bezüglich einer Vorwärtsfahrtrichtung des Lastkraftwagens (10) hinter der Hinterachse (20) angeordnet ist,
**dadurch gekennzeichnet, dass** eine Ausgangswelle der elektrischen Antriebseinheit (12) in einer Längsrichtung des Lastkraftwagens (10) ausgerichtet ist.

2. Lastkraftwagen (10) nach Anspruch 1, wobei:
die elektrische Antriebseinheit (12) antreibend mit der Hinterachse (20) verbunden ist; und/oder
die elektrische Antriebseinheit (12) auf Höhe der zwei Hauptlängsträger (22) angeordnet ist; und/oder
die elektrische Antriebseinheit (12) unterhalb eines Ladeaufbaus (24) des Lastkraftwagens (10) angeordnet ist.

3. Lastkraftwagen (10) nach Anspruch 1 oder Anspruch 2, wobei:
die elektrische Antriebseinheit (12) bezüglich einer Vertikalrichtung nach unten über die zwei Hauptlängsträger (22) übersteht; und/oder
die elektrische Antriebseinheit (12) bezüglich einer Vertikalrichtung nach oben bündig mit den zwei Hauptlängsträgern (22) ist oder bezüglich der zwei Hauptlängsträgern (22) zurückversetzt ist.

4. Lastkraftwagen (10) nach einem der vorherigen Ansprüche, ferner aufweisend:
einen Inverter (36), der elektrisch mit der elektrischen Antriebseinheit (12) verbunden und zwischen den zwei Hauptlängsträgern (22) angeordnet ist.

5. Lastkraftwagen (10) nach Anspruch 4, wobei:
der Inverter (36) bezüglich der Vorwärtsfahrtrichtung hinter der Hinterachse (20) und vor der elektrischen Antriebseinheit (12) angeordnet ist.

6. Lastkraftwagen (10) nach einem der vorherigen Ansprüche, wobei:
die elektrische Antriebseinheit (12) schräg gelagert ist; und/oder
der Lastkraftwagen (10) ferner eine Gelenkwelle (26) aufweist, die die elektrische Antriebseinheit (12) antreibend mit der Hinterachse (20) verbindet, in einer Längsrichtung des Lastkraftwagens (10) ausgerichtet ist und angeschrägt zu einer Horizontalachse verläuft.

7. Lastkraftwagen (10) nach einem der vorherigen Ansprüche, wobei:
die elektrische Antriebseinheit (12) in einer 3-Punkt-Lagerung gelagert ist.

8. Lastkraftwagen (10) nach Anspruch 7, wobei:
zwei Lager (28) der 3-Punkt-Lagerung an einer der Hinterachse (20) zugewandten Seite der elektrischen Antriebseinheit (12) angeordnet sind und ein Lager (28) der 3-Punkt-Lagerung an einer der Hinterachse (20) abgewandten Seite der elektrischen Antriebseinheit (12) angeordnet ist, vorzugsweise mittig.

9. Lastkraftwagen (10) nach einem der vorherigen Ansprüche, ferner aufweisend:
einen ersten Querträger (32), der zwischen den zwei Hauptlängsträgern (22) befestigt ist; und
einen zweiten Querträger (34), der zwischen den zwei Hauptlängsträgern (22) befestigt ist,
wobei die elektrischen Antriebseinheit (12) von unten an dem ersten Querträger (32) und an dem zweiten Querträger (34) angebracht ist.

10. Lastkraftwagen (10) nach Anspruch 9, wobei:
die elektrische Antriebseinheit (12) zwischen dem ersten Querträger (32) und dem zweiten Querträger (34) angeordnet ist; und/oder
der erste Querträger (32) und/oder der zweite Querträger (34) ein umgedrehtes U-Profil aufweisen, das einen Aufnahmeraum umfasst, in dem mindestens ein Lager (28) zur Lagerung der elektrischen Antriebseinheit (12) zumindest teilweise angeordnet sind.

11. Lastkraftwagen (10) nach einem der vorherigen Ansprüche, ferner aufweisend:
ein Fahrerhaus (14), das rückseitig, vorzugsweise starr, an dem Fahrzeugrahmen (16) angebracht ist, wobei:
das Fahrerhaus (14) den Lastkraftwagen (10) nach unten begrenzt; und/oder
das Fahrerhaus (14) einen Bodenabstand von höchstens 50 cm, vorzugsweise von höchstens 40 cm, aufweist; und/oder
das Fahrerhaus (14) in einer Vertikalrichtung nach unten über den Fahrzeugrahmen (16) übersteht.

12. Lastkraftwagen (10) nach einem der vorherigen Ansprüche, ferner aufweisend:
eine Kühlvorrichtung (38) zum Kühlen der elektrischen Antriebseinheit (12) und/oder eines Inverters (36) für die elektrische Antriebseinheit (12), wobei die Kühlvorrichtung (38) bezüglich der Vorwärtsfahrtrichtung hinter der Hinterachse (20) angeordnet und außen an einem der Hauptlängsträger (22) auf Höhe der Hauptlängsträger (22) angebracht ist.

13. Lastkraftwagen (10) nach Anspruch 12, wobei:
die Kühlvorrichtung (38) einen Kühler (44), vorzugsweise einen Ölkühler, zum Kühlen der elektrischen Antriebseinheit (12) und/oder einen Kühler (44), vorzugsweise einen Wasserkühler, zum Kühler des Inverters (36) aufweist.

14. Lastkraftwagen (10) nach einem der vorherigen Ansprüche, ferner aufweisend:
einen heckseitigen Unterfahrschutz (52), der sich in einer Querrichtung des Lastkraftwagens (10) erstreckt und auf Höhe der elektrischen Antriebseinheit (12) angeordnet ist, vorzugsweise zum heckseitigen Schützen der elektrischen Antriebseinheit (12).

15. Lastkraftwagen (10) nach einem der vorherigen Ansprüche, ferner aufweisend:
einen elektrischen Ladeanschluss (46) zum elektrischen Aufladen des Lastkraftwagens (10), wobei der elektrische Ladeanschluss (46) bezüglich der Vorwärtsfahrtrichtung hinter der Hinterachse (20) angeordnet und außen an einem der Hauptlängsträger (22) angebracht ist; und/oder
ein elektrisches Ladekabel (48) zum elektrischen Aufladen des Lastkraftwagens (10), wobei das elektrische Ladekabel (48) bezüglich der Vorwärtsfahrtrichtung hinter der Hinterachse (20) angeordnet und außen an einem der Hauptlängsträger (22) positioniert ist.

## Claims

1. A heavy goods vehicle (10) having:
a rear axle (20);
a vehicle frame (16) which is designed as a ladder-type frame and has two main longitudinal members (22) which are spaced apart in parallel; and
an electrical drive unit (12) which is arranged between the two main longitudinal members (22) and is arranged behind the rear axle (20) with respect to a forward direction of travel of the heavy goods vehicle (10), **characterized in that**
an output shaft of the electrical drive unit (12) is oriented in a longitudinal direction of the heavy goods vehicle (10).

2. The heavy goods vehicle (10) according to Claim 1, wherein:
the electrical drive unit (12) is connected in a driving manner to the rear axle (20); and/or
the electrical drive unit (12) is arranged level with the two main longitudinal members (22); and/or
the electrical drive unit (12) is arranged below a loading structure (24) of the heavy goods vehicle (10).

3. The heavy goods vehicle (10) according to Claim 1 or Claim 2, wherein:
the electrical drive unit (12) projects beyond the two main longitudinal members (22) downwardly with respect to a vertical direction; and/or
the electrical drive unit (12) is flush with the two main longitudinal members (22) upwardly with respect to a vertical direction or is recessed with respect to the two main longitudinal members (22).

4. The heavy goods vehicle (10) according to one of the preceding claims, further having:
an inverter (36) which is electrically connected to the electrical drive unit (12) and is arranged between the two main longitudinal members (22).

5. The heavy goods vehicle (10) according to Claim 4, wherein:
the inverter (36) is arranged behind the rear axle (20) and in front of the electrical drive unit (12) with respect to the forward direction of travel.

6. The heavy goods vehicle (10) according to one of the preceding claims, wherein:
the electrical drive unit (12) is mounted in an oblique manner; and/or
the heavy goods vehicle (10) further has an articulated shaft (26) which connects the electrical drive unit (12) in a driving manner to the rear axle (20), is oriented in a longitudinal direction of the heavy goods vehicle (10) and runs at an angle in relation to a horizontal axis.

7. The heavy goods vehicle (10) according to one of the preceding claims, wherein:
the electrical drive unit (12) is mounted in a 3-point bearing arrangement.

8. The heavy goods vehicle (10) according to Claim 7, wherein:
two bearings (28) of the 3-point bearing arrangement are arranged on a side of the electrical drive unit (12) that faces the rear axle (20) and one bearing (28) of the 3-point bearing arrangement is arranged, preferably centrally, on a side of the electrical drive unit (12) that is averted from the rear axle (20).

9. The heavy goods vehicle (10) according to one of the preceding claims, further having:
a first crossmember (32) which is fastened between the two main longitudinal members (22); and
a second crossmember (34) which is fastened between the two main longitudinal members (22),
wherein the electrical drive unit (12) is attached to the first crossmember (32) and to the second crossmember (34) from below.

10. The heavy goods vehicle (10) according to Claim 9, wherein:
the electrical drive unit (12) is arranged between the first crossmember (32) and the second crossmember (34); and/or
the first crossmember (32) and/or the second crossmember (34) have/has an inverted U-profile which encloses a receiving space in which at least one bearing (28) for mounting the electrical drive unit (12) is at least partially arranged.

11. The heavy goods vehicle (10) according to one of the preceding claims, further having:
a driver's cab (14) which is, preferably rigidly, attached to the rear side of the vehicle frame (16), wherein:
the driver's cab (14) delimits the heavy goods vehicle (10) at the bottom; and/or
the driver's cab (14) is at a distance from the ground of at most 50 cm, preferably of at most 40 cm; and/or the driver's cab (14) projects beyond the vehicle frame (16) downwardly in a vertical direction.

12. The heavy goods vehicle (10) according to one of the preceding claims, further having:
a cooling apparatus (38) for cooling the electrical drive unit (12) and/or an inverter (36) for the electrical drive unit (12), wherein the cooling apparatus (38) is arranged behind the rear axle (20) with respect to the forward direction of travel and is attached to the outside of one of the main longitudinal members (22) level with the main longitudinal members (22).

13. The heavy goods vehicle (10) according to Claim 12, wherein:
the cooling apparatus (38) has a cooler (44), preferably an oil cooler, for cooling the electrical drive unit (12) and/or a cooler (44), preferably a water cooler, for cooling the inverter (36).

14. The heavy goods vehicle (10) according to one of the preceding claims, further having:
a rear-side underride protector (52) which extends in a transverse direction of the heavy goods vehicle (10) and is arranged level with the electrical drive unit (12), preferably for protecting the rear side of the electrical drive unit (12).

15. The heavy goods vehicle (10) according to one of the preceding claims, further having:
an electrical charging connection (46) for electrically charging the heavy goods vehicle (10), wherein the electrical charging connection (46) is arranged behind the rear axle (20) with respect to the forward direction of travel and is arranged on the outside of one of the main longitudinal members (22); and/or
an electrical charging cable (48) for electrically charging the heavy goods vehicle (10), wherein the electrical charging cable (48) is arranged behind the rear axle (20) with respect to the forward direction of travel and is positioned on the outside of one of the main longitudinal members (22).

## Revendications

1. Poids lourd (10), présentant :
un essieu arrière (20) ;
un châssis de véhicule (16) qui est réalisé sous la forme d'un châssis en échelle et présente deux longerons principaux (22) qui sont espacés en parallèle ; et
une unité d'entraînement électrique (12) qui est disposée entre les deux longerons principaux (22) et qui est disposée derrière l'essieu arrière (20) par rapport à une direction de marche avant du poids lourd (10),
**caractérisé en ce qu'**un arbre de sortie de l'unité d'entraînement électrique (12) est orienté dans une direction longitudinale du poids lourd (10).

2. Poids lourd (10) selon la revendication 1, dans lequel :
l'unité d'entraînement électrique (12) est reliée en entraînement à l'essieu arrière (20) ; et/ou
l'unité d'entraînement électrique (12) est disposée à la hauteur des deux longerons principaux (22) ; et/ou
l'unité d'entraînement électrique (12) est disposée au-dessous d'une structure de chargement (24) du poids lourd (10).

3. Poids lourd (10) selon la revendication 1 ou 2, dans lequel :
l'unité d'entraînement électrique (12) dépasse des deux longerons principaux (22) vers le bas, par rapport à une direction verticale ; et/ou
l'unité d'entraînement électrique (12) est en affleurement vers le haut avec les deux longerons principaux (22) par rapport à une direction verticale, ou est placée en retrait par rapport aux deux longerons principaux (22).

4. Poids lourd (10) selon l'une quelconque des revendications précédentes, présentant en outre :
un inverseur (36) qui est relié électriquement à l'unité d'entraînement électrique (12) et est disposé entre les deux longerons principaux (22).

5. Poids lourd (10) selon la revendication 4, dans lequel :
l'inverseur (36) est disposé derrière l'essieu arrière (20) et devant l'unité d'entraînement électrique (12).

6. Poids lourd (10) selon l'une quelconque des revendications précédentes, dans lequel :
l'unité d'entraînement électrique (12) est montée en biais ; et/ou
le poids lourd (10) présente en outre un arbre à cardan (26) qui relie l'unité d'entraînement électrique (12) en entraînement à l'essieu arrière (20), est orienté dans une direction longitudinale du poids lourd (10) et s'étend en oblique par rapport à un axe horizontal.

7. Poids lourd (10) selon l'une quelconque des revendications précédentes, dans lequel :
l'unité d'entraînement électrique (12) est montée sur une suspension à trois points.

8. Poids lourd (10) selon la revendication 7, dans lequel :
deux paliers (28) de la suspension à trois points sont disposés sur un côté de l'unité d'entraînement électrique (12), tourné vers l'essieu arrière (20), et un palier (28) de la suspension à trois points est disposé sur un côté de l'unité d'entraînement électrique (12), détourné de l'essieu arrière (20), de préférence au centre.

9. Poids lourd (10) selon l'une quelconque des revendications précédentes, présentant en outre :
une première traverse (32) qui est fixée entre les deux longerons principaux (22) ; et
une deuxième traverse (34) qui est fixée entre les deux longerons principaux (22),
l'unité d'entraînement électrique (12) étant fixée par le bas à la première traverse (32) et à la deuxième traverse (34).

10. Poids lourd (10) selon la revendication 9, dans lequel :
l'unité d'entraînement électrique (12) est disposée entre la première traverse (32) et la deuxième traverse (34) ; et/ou
la première traverse (32) et/ou la deuxième traverse (34) présentent un profil en U inversé qui comprend un espace de réception dans lequel au moins un palier (28) pour la suspension de l'unité d'entraînement électrique (12) est disposé au moins en partie.

11. Poids lourd (10) selon l'une quelconque des revendications précédentes, présentant en outre :
une cabine de conducteur (14) qui est fixée à l'arrière, de préférence de manière rigide, au châssis de véhicule (16), dans lequel :
la cabine de conducteur (14) délimite le poids lourd (10) vers le bas ; et/ou
la cabine de conducteur (14) présente une garde au sol d'un maximum de 50 cm, de préférence d'un maximum de 40 cm ; et/ou
la cabine de conducteur (14) dépasse du châssis de véhicule (16) vers le bas, dans une direction verticale.

12. Poids lourd (10) selon l'une quelconque des revendications précédentes, présentant en outre :
un dispositif de refroidissement (38) pour refroidir l'unité d'entraînement électrique (12), et/ou un inverseur (36) pour l'unité d'entraînement électrique (12), le dispositif de refroidissement (38) étant disposé derrière l'essieu arrière (20), par rapport à la direction de marche avant, et étant fixé à l'extérieur à l'un des longerons principaux (22) à la hauteur des longerons principaux (22).

13. Poids lourd (10) selon la revendication 12, dans lequel :
le dispositif de refroidissement (38) présente un radiateur (44), de préférence un refroidisseur d'huile, pour refroidir l'unité d'entraînement électrique (12), et/ou un radiateur (44), de préférence un refroidisseur à eau, pour refroidir l'inverseur (36).

14. Poids lourd (10) selon l'une quelconque des revendications précédentes, présentant en outre :
un dispositif anti-encastrement (52) côté arrière qui s'étend dans une direction transversale du poids lourd (10) et est disposé à la hauteur de l'unité d'entraînement électrique (12), de préférence pour la protection côté arrière de l'unité d'entraînement électrique (12).

15. Poids lourd (10) selon l'une quelconque des revendications précédentes, présentant en outre :
un port de charge électrique (46) pour la recharge électrique du poids lourd (10), le port de charge électrique (46) étant disposé derrière l'essieu arrière (20), par rapport à la direction de marche avant, et étant fixé à l'extérieur sur l'un des longerons principaux (22) ; et/ou
un câble de charge électrique (48) pour la recharge électrique du poids lourd (10), le câble de charge électrique (48) étant disposé derrière l'essieu arrière (20), par rapport à la direction de marche avant, et étant positionné à l'extérieur sur l'un des longerons principaux (22).
